# EUROPÄISCHE PATENTSCHRIFT

(11) **EP 2 466 214 B1**
(45) Veröffentlichungstag und Bekanntmachung des Hinweises auf die Patenterteilung: **19.07.2017**
(21) Anmeldenummer: 11193158.0
(22) Anmeldetag: 13.12.2011
(51) Int. Cl.: F24C 15/00, F24C 15/32, A47J 31/00, A21B 3/04, A47J 27/04

(54) **Wassertank für ein Dampfgargerät sowie Dampfgargerät mit einem Wassertank**
Water tank for a steaming device and steaming device with such a water tank
Réservoir d'eau pour un appareil de cuisson à vapeur et appareil de cuisson à vapeur équipé d'un réservoir d'eau

(30) Priorität: 20.12.2010 DE 102010063495
(43) Veröffentlichungstag der Anmeldung: 20.06.2012
(73) Patentinhaber: BSH Hausgeräte GmbH, 81739 München (DE)
(72) Erfinder: Bleier, Konrad, 76599 Weisenbach (DE); Hintermayer, Manfred, 76185 Karlsruhe (DE); Wittrock, Frank, 69198 Schriesheim (DE)

(56) Entgegenhaltungen:
- DE-A1-102007 041 822
- JP-A- 2003 004 235
- JP-A- 2006 258 372
- US-A- 4 426 923
- US-A- 5 228 107
- US-A1- 2006 278 630

## Beschreibung

Die Erfindung betrifft einen Wassertank für ein Dampfgargerät mit einem Behälter, welcher zu Aufnahme des Wassers ausgebildet ist. Der Wassertank umfasst darüber hinaus eine Verdampfereinheit zum Verdampfen des Wassers, welche an dem Behälter angeordnet ist und mit dem Behälter eine Einheit bildet.

Aus der EP 1 108 384 B1 ist ein Haushaltsgerät zum drucklosen Dampfgaren bekannt. Dieses Haushaltsgerät umfasst einen Behälter zur Aufnahme von Wasser mit einer gleichzeitig vorhandenen Dampferzeugereinrichtung, wobei innerhalb des Behälters eine Trennung von Kaltwasser und erhitztem Wasser erfolgt. Der Behälter weist unterhalb eines durch mindestens eine Trennwand abgeteilten Kaltwassergefäßes einen kleinen Aufnahmeraum für Wasser auf, welche mit einer Heizeinrichtung als Dampferzeuger ausgestattet ist. Bei jeder Ausgestaltung ist somit die Heizeinrichtung in den Behälter selbst integriert. Die Zugänglichkeit und Handhabbarkeit ist dabei schwierig.

Darüber hinaus ist aus der EP 1 795 800 A1 ein Dampfgargerät bekannt, welches ebenfalls einen Wassertank aufweist. Auch bei dieser Ausgestaltung ist in den Behälter integriert eine Induktionsspule angeordnet, die in Wechselwirkung mit einer Induktionseinheit zum Aufheizen des Wassers in dem Behälter ausgebildet ist.

Ferner ist aus der DE 44 27 460 A1 ein Backofen zum Dampfgaren bekannt. Die Verdampfereinrichtung ist außerhalb des Garraums angeordnet und kann sowohl bei geöffneter als auch bei geschlossener Garraumtür herausziehbar im Ofengehäuse gehalten werden.

Aus der US 4,426,923 und der JP 2006258372 A sind Dampfgargeräte bekannt, bei denen unter einer Bodenplatte eines Garraums ein separater Behälter zur Aufnahme von Wasser und dazu beabstandet und separiert jeweils eine Verdampfereinheit angeordnet sind. Der Behälter ist mit der Verdampfereinheit über eine Verbindungsleitung verbunden, über welche das Wasser in die Verdampfereinheit fließen kann.

Aus der US 2006/0278630 A1 ist ebenfalls ein Dampfgargerät bekannt, bei dem in einen Aufnahmeschacht in einem Gehäuse ein Behälter für Wasser eingeschoben werden kann. Außerhalb des Behälters, jedoch auch in dem Schacht, kann eine Induktionsspule positioniert werden, über welche dann der Behälter aufgeheizt werden kann. Der Behälter umfasst einen abhebbaren Deckel.
Darüber hinaus ist aus der DE 10 2007 041 822 A1 ein Dampfgarer bekannt, bei dem in einer herausziehbaren Schublade ein Behälter für Wasser einsetzbar ist.

Weiterer relevanter Stand der Technik ist aus den Dokumenten US 5228197 A und JP 2003 004235 A bekannt, wobei das letztgenannte Dokument den nächstliegenden Stand der Technik darstellt. Bei den bekannten Ausgestaltungen des Wassertanks ist die Funktionalität und die nutzerfreundliche Handhabbarkeit eingeschränkt.
Es ist Aufgabe der vorliegenden Erfindung, einen Wassertank für ein Dampfgargerät sowie ein Dampfgargerät mit einem Wassertank zu schaffen, welcher bzw. welches im Hinblick auf die Handhabbarkeit von einem Nutzer funktioneller und nutzerfreundlicher bedienbar ist.
Diese Aufgabe wird durch einen Wassertank, welcher die Merkmale nach Anspruch 1 aufweist, und ein Dampfgargerät, welches die Merkmale nach Anspruch 17 aufweist, gelöst.
Ein erfindungsgemäßer Wassertank für ein Dampfgargerät umfasst einen Behälter zur Aufnahme des Wassers. Der Wassertank umfasst darüber hinaus eine Verdampfereinheit zum Verdampfen des Wassers. Die Verdampfereinheit ist frontseitig an dem Behälter anschließend an diesen Behälter angeordnet. Es wird somit eine Ausgestaltung des Wassertanks geschaffen, bei der diese Verdampfereinheit nicht mehr im Inneren des Behälters selbst angeordnet ist, sondern quasi in frontseitiger Verlängerung des Behälters an dessen einen Ende anschließend positioniert ist. Die Verdampfereinheit ist somit quasi außerhalb des Innenvolumens des Behälters positioniert, jedoch an dem Behälter selbst angeordnet. Durch eine derartige örtliche Separierung, jedoch mechanische Verbindung ist die Handhabbarkeit im Hinblick auf den Bereich, in dem das Wasser vorhanden ist, und eingebracht werden soll einerseits einfach zugänglich und separiert. Andererseits ist auch die Verdampfereinheit quasi umfänglich zugänglich und kann auch hier jederzeit quasi separat betrachtet und bedient werden. Auch Montagezwecke oder dergleichen können dadurch für die jeweiligen Teilbereiche einfacher und gezielt durchgeführt werden. Auch Wartungsarbeiten oder sonstige Vorkehrungen können dadurch vereinfacht und spezifiziert erfolgen.

Vorzugsweise ist vorgesehen, dass die Verdampfereinheit topfförmig ausgebildet ist. Durch diese Ausgestaltung und Formgebung kann eine sehr kompakte Teilkomponente des Wassertanks geschaffen werden. Die topfartige Ausgestaltung kann sowohl zylinderförmig als auch quaderförmig sein, sodass sowohl runde bzw. auch eckenfreie Querschnitte ebenso ausgebildet sein können, wie eckige Querschnitte.

Durch diese Möglichkeit der Variabilität der Formgebung kann eine individuelle Anpassung der Verdampfereinheit an gegebenem Bauraum im Dampfgargerät oder im Hinblick auf spezifische Ankopplungen des Wassertanks an ein Dampfleitungssystem erzielt werden.

Gerade in Kombination mit der gemäß der Erfindung spezifischen örtlichen Positionierung der Teilkomponenten des Wassertanks zueinander, nämlich der quasi in Längsrichtung des Wassertanks in Reihe zueinander angeordneten Behälter und Verdampfereinheit kann dadurch eine besonders große Variabilität bei der Formgebung des Wassertanks erreicht werden. Die Formgebung der Verdampfereinheit ist durch die behälterexterne Anordnung nämlich nicht mehr an die Formgebung des Behälters gebunden und begrenzt. Hohe Funktionalität des gesamten Wassertanks lässt sich dadurch erzielen.

Vorzugsweise ist vorgesehen, dass die Verdampfereinheit mit einer Oberseite einer Verdampferschale über dem Boden des Behälters nach unten versetzt angeordnet ist. Durch eine derartige Positionierung in Verbindung mit der örtlichen Positionierung der Verdampfereinheit einerseits und des Behälters andererseits relativ zueinander kann ein besonders vorteilhafter Überlauf des Wassers von dem Behälter in die Verdampfereinheit erzielt werden.

Die Verdampfereinheit ist mit einem Adapterträger an dem Behälter angeordnet. Durch diesen kann eine besonders mechanisch stabile Befestigung erzielt werden. Darüber hinaus kann gerade bei unterschiedlichen Formgebungen der Verdampfereinheit einerseits und des Behälters andererseits durch diesen Adapterträger eine Einheit des Wassertanks gebildet werden.

Vorzugsweise ist der Adapterträger einstückig ausgebildet, insbesondere aus Kunststoff.

Vorzugsweise umfasst der Adapterträger an einem Ende einen rahmenartigen Flansch, der zum Ankoppeln an einen frontseitigen Endbereich des Behälters, welcher insbesondere offen an dieser Stelle ausgebildet ist, vorgesehen ist. Dieser rahmenartige Flansch kann beispielsweise als Steckverbindung oder Rastverbindung gebildet sein, die dann auf diese Frontseite des Behälters aufgesteckt oder aufgerastet werden kann.

Vorzugsweise ist vorgesehen, dass der Adapterträger im Bereich dieses ersten Endes eine Formgebung und eine Größe aufweist, die im Wesentlichen der Formgebung und der Größe dieses ersten Endes des Behälters entspricht. Im zusammengesetzten Zustand des Adapterträgers mit dem Behälter kann insbesondere vorgesehen sein, dass diese Komponenten dann an den Außenseiten bündig bzw. fluchtend angeordnet sind. Auch dadurch kann die Kompaktheit erzielt werden. Andererseits können dadurch unerwünschte Überstände oder Kanten verhindert werden, sodass ein unerwünschtes Anstoßen des Nutzers daran einerseits und andererseits ein Verklemmen oder Verspreizen des Wassertanks beim Einführen in das Dampfgargerät verhindert ist.

Vorzugsweise ist vorgesehen, dass der Adapterträger reversibel lösbar an dem Behälter anbringbar ist. Dadurch kann zu Wartungszwecken oder Montagezwecken ein Separieren des Adapterträgers von dem Behälter erreicht werden.

Es kann auch vorgesehen sein, dass der Adapterträger zerstörungsfrei unlösbar mit dem Behälter verbunden ist, beispielsweise einstückig mit diesem ausgebildet ist.

Der Adapterträger weist ein zweites Teilelement auf, welches an den insbesondere als rahmenartigen Flansch ausgebildeten ersten Teilbereich anschließt. Dieser weitere Teilbereich ist dann zur Aufnahme der Verdampfereinheit vorgesehen. Er kann ebenfalls als zusammenhängender Rahmen ausgebildet sein, in den dann die Verdampfereinheit eingesetzt werden kann. Es kann jedoch auch vorgesehen sein, dass dieser zweite Teilbereich ebenfalls als Vertiefung, insbesondere topfförmig ausgebildet ist, und darin die Verdampfereinheit aufgenommen werden kann.

Vorzugsweise ist vorgesehen, dass sich der erste Teilbereich und der zweite Teilbereich in unterschiedlichen Raumrichtungen mit ihren Ausmaßebenen erstrecken. Dies bedeutet insbesondere, dass die Ebene, in der sich der rahmenartige Flansch mit seiner Querschnittgeometrie erstreckt, sich nicht gleich in der Ebene erstreckt, in der sich der zweite Teilbereich des Adapterträgers im Querschnitt erstreckt. Insbesondere sind diese beiden Ebenen in einem Winkel, insbesondere 90° zueinander angeordnet.

Vorzugsweise ist vorgesehen, dass der Behälter an der der Verdampfereinheit zugewandten Stirnseite offen ausgebildet ist. Dies ist diejenige Seite, an welchem vorderen Rand der Stirnseite dann auch der Adapterträger mit einem ersten Teilbereich, insbesondere dem rahmenartigen Flansch, ankoppelbar ist.

Es ist vorgesehen, dass ein Deckel der Verdampfereinheit schwenkbar an dem Behälter angeordnet ist. Es ist vorgesehen, dass der Deckel schwenkbar an dem Adapterträger angeordnet ist. Vorzugsweise ist die Schwenkachse horizontal orientiert, sodass der Deckel um diese Horizontalachse nach oben und nach unten geklappt werden kann. Dadurch ist die Zugänglichkeit zur Verdampfereinheit besonders nutzerfreundlich und einfach handhabbar. Es kann quasi von oben auf die Verdampferschale frei zugänglich eingesehen werden, wenn der Deckel geöffnet ist.

Vorzugsweise ist vorgesehen, dass sich die Schwenkachse an einem oberen Rahmenteil des ersten Teilbereichs des Adapterträgers erstreckt. Dadurch und in Verbindung mit der Formgebung des Deckels kann ein möglichst großer Volumenraum für den zu erzeugenden Dampf der Verdampfereinheit gebildet werden.

Darüber hinaus wird durch diese Positionierung ein möglichst großes Verschwenken nach hinten des geöffneten Deckels ermöglicht, da der Behälter dann nicht im Weg ist.

Vorzugsweise ist der Deckel im geschlossenen Zustand so angeordnet, dass er dem Behälter von der Verdampfereinheit dichtend separiert. Der Deckel ist dadurch multifunktionell ausgestaltet. Er dient somit nicht nur zur Abdeckung der Verdampfereinheit, sondern zugleich auch zur abdichtenden Trennung des Innenvolumens des Behälters von dem Innenvolumen der Verdampfereinheit.

Vorzugsweise ist an der Innenseite des Deckels eine Verschlusswand angeordnet, welche im geschlossenen Zustand des Deckels eine frontseitige Öffnung des Behälters dichtend verschließt. Durch diese spezifische Wand mit ihrer entsprechenden Formgebung kann eine besonders gezielte Volumenaufteilung zwischen dem Verdampferraum und dem Innenraum des Behälters erreicht werden. Vorzugsweise ist diese Verschlusswand nicht eben ausgebildet. Sie erstreckt sich insbesondere von der Innenseite des Deckels kommend und zu ihrem freien Ende hin dann gekrümmt. Insbesondere ist die freie vordere Kante bzw. der vordere Rand dieser Verschlusswand zumindest teilweise gebogen ausgebildet.

Vorzugsweise ist diese Frontkante der Verschlusswand so angeordnet, dass im geschlossenen Zustand des Deckels ein Eingreifen in eine Aufnahmenut des Adapterträgers gegeben ist. Diese Aufnahmenut weist eine Länge und einen Formverlauf auf, der an die Länge und den Formverlauf dieser Frontkante angepasst ist. Vorzugsweise ist in dieser Aufnahmenut eine Dichtung, insbesondere eine Silikondichtung, angeordnet, insbesondere eingespritzt. Dadurch wird eine sehr verschleißarme und robuste sowie besonders gut dichtende Ausgestaltung erreicht.

Vorzugsweise ist vorgesehen, dass im geschlossenen Zustand des Deckels dieser den Innenraum des Behälters luftdicht von dem Innenraum der Verdampfereinheit abtrennt. Die eine Kammer, nämlich der Innenraum des Behälters, ist der Wasservorratsbereich. Der andere Raum bzw. die andere Kammer ist dann der Verdampferbereich.

Vorzugsweise ist vorgesehen, dass der Behälter zumindest bereichsweise durchsichtig ausgebildet ist. Dadurch kann der Wasserstand im Behälter auch von außen leicht erkannt werden.

Vorzugsweise ist vorgesehen, dass der Wassertank gemäß dem Vogeltränkeprinzip aufgebaut ist. Dies bedeutet, dass der Wassereinlauf von dem Behälter in die Verdampfereinheit gemäß diesem Vogeltränkeprinzip erfolgt. Dazu ist vorgesehen, dass eine kleine lochartige Verbindung zwischen dem Behälter und der Verdampfereinheit in einer Trennwand, die insbesondere unterhalb der Aufnahmenut des Adapterträgers für die Frontkante der Verschlusswand des Deckels angeordnet ist ausgebildet ist. Gerade die Wirkverbindung mit der positionellen Anordnung der Verdampfereinheit einerseits und des Behälters andererseits, insbesondere der nach unten versetzten Position der Verdampfereinheit gegenüber dem Boden des Behälters, lässt dieses Vogeltränkeprinzip in besonders vorteilhafter Weise realisieren. Immer dann, wenn der Wasserstand in der Verdampferschale der Verdampfereinheit unter das Niveau der Oberkante dieser lochartigen Verbindung mit dem Behälter absinkt, tritt eine Luftblase von der Verdampfereinheit über die Öffnung in den Behälter und zugleich tropft andererseits von dem Behälter Wasser in die Verdampfereinheit. Dies ist insbesondere dann gegeben, wenn der Deckel geschlossen ist und der Wassertank nach außen hin quasi abgedichtet ist.

Mittels des Vogeltränkeprinzips füllt sich der Verdampferbereich in der Verdampfereinheit bei geschlossenem Deckel und entsprechender Arbeitslage des Wassertanks mit einer bestimmten Menge, die beispielsweise 150 ml betragen kann. Bei geringerer Wassermenge im Verdampferbereich dringt dann Luft in den Behälter über die angesprochene Verbindungsöffnung ein, sodass Wasser aus diesem in den Verdampferbereich fließen kann.

Vorzugsweise ist vorgesehen, dass an der Außenseite des Deckels ein Griff angeordnet ist. Dieser Griff ist insbesondere als Bügelgriff ausgebildet. Dies bedeutet, dass er ein längliches Griffstück aufweist, welches von einer Hand umgriffen werden kann. Durch diese Ausgestaltung kann der Deckel zielgenau bewegt werden und durch einen Nutzer sicher betätigt werden.

Vorzugsweise ist vorgesehen, dass der Griff in einer Mulde des Deckels angeordnet ist. Dies bedeutet, dass die Außenseite des Deckels, insbesondere die Oberseite eine Einbuchtung aufweist, in der der Griff angeordnet ist. Ein unerwünschtes Überstehen des Griffs kann dadurch vermieden werden. Dadurch kann auch ein besonders kompakter Deckel realisiert werden, der beim Einbringen des Wassertanks in das Dampfgargerät sich nicht verklemmt oder verspreizt oder unerwünscht an bestimmten Stellen anstößt.

Vorzugsweise ist vorgesehen, dass der Griff in der Mulde des Deckels derart angeordnet ist, dass er sich maximal bis auf das Niveau der Außenseite des Deckels außerhalb der Mulde nach außen erstreckt. Dies bedeutet, dass der Griff somit quasi nicht über das maximale Höhenniveau des Deckels im geschlossenen Zustand nach oben übersteht. Dadurch können die oben genannten Vorteile nochmals verbessert werden.

Vorzugsweise ist der Deckel so konzipiert, dass im geschlossenen Zustand des Deckels dessen Außenseite im Wesentlichen bündig mit der Oberseite des Behälters angeordnet ist. Auch dadurch kann eine sehr flachbauende Ausgestaltung realisiert werden.

Vorzugsweise ist der Griff so angeordnet, dass der gesamte Wassertank in einer Befüllungslage gegriffen und transportiert werden kann, ohne dass Wasser unerwünschterweise ausläuft oder in die Verdampfereinheit überläuft. Vorzugsweise ist daher der Griff am Deckel so positioniert, dass im geschlossenen Zustand des Deckels der Griff mit seiner Griffstange horizontal liegt und insbesondere am vorderen Ende des Deckels angeordnet ist. Das vordere Ende bezeichnet dabei das Ende, welches dem Behälter abgewandt ist.

Der Wassertank kann somit so transportiert und getragen werden, dass der längliche Behälter nicht horizontal steht, sondern beispielsweise vertikal nach unten orientiert ist. Die Ausgestaltung ist dann ähnlich dem Prinzip einer Milchkanne.

Das gesamte Wasser ist dann beim Transport quasi ausschließlich im Behälter und dieser befindet sich dann bei einer derartigen Transportsituation quasi vollständig unterhalb der Verdampfereinheit in vertikaler Richtung betrachtet.

Danach kann auch der Deckel geöffnet und geschlossen werden, ohne dass Wasser auslaufen könnte.

Der Griff ist insbesondere einstückig in den Deckel integriert, sodass der Deckel und der Griff ein Bauteil bilden.

Er kann jedoch auch als Klappbügel oder feststehender Bügel an dem Adapterträger angeordnet sein.

Vorzugsweise ist vorgesehen, dass die Verdampferschale der Verdampfereinheit somit an ihrer Oberseite korrosionsgeschützt ausgebildet ist. Dabei kann vorgesehen, dass eine entsprechende Beschichtung aus einem entsprechenden Material vorgesehen ist. Es kann auch ermöglicht sein, dass die gesamte Verdampferschale aus einem derartigen korrosionsvermeidenden Material ausgebildet ist.

Vorzugsweise ist an dem Deckel zumindest eine Rastlasche ausgebildet, die mit einem komplementären Rastelement an einem Gehäuse der Verdampfereinheit und/oder einem Rastelement, das an dem Adapterträger angeordnet ist, verrastbar ist. Eine derartige Ausgestaltung der mechanischen Verbindung ist sehr nutzerfreundlich und leicht handhabbar. Darüber hinaus ist sie schnell und aufwandsarm lösbar bzw. verrastbar und gewährleistet ausreichenden mechanischen Halt, um die vollständig dichtende Anordnung bei geschlossenem Deckel erreichen zu können.

Vorzugsweise ist vorgesehen, dass der Deckel eine Formgebung aufweist, die so ausgebildet ist, dass sie im geschlossenen Zustand des Deckels eine frontseitige Öffnung des Behälters, an welche die Verdampfereinheit anschließend angeordnet ist, von vorne, und die Verdampferschale von oben abgedeckt sind. Gleichzeitig können somit in unterschiedliche Raumrichtungen orientierte Komponenten, die Öffnung des Behälters einerseits und die Verdampferschale andererseits, gleichzeitig mit einem einzigen Bauteil abgedeckt und voneinander separiert werden.

Vorzugsweise weist der Deckel zumindest einen Dampfauslassstutzen auf. Dieser kann dann mit einem Dampfleitsystem verbunden werden, wenn der Wassertank in das Dampfgargerät eingesetzt ist. Der in der Verdampfereinheit erzeugte Dampf kann dann über diesen Dampfauslassstutzen und das Dampfleitsystem in einen Garraum des Dampfgargeräts eingebracht werden.

Vorzugweise weist die Verdampfereinheit ein Gehäuse auf, in dem eine Verdampferschale angeordnet ist und in welchem unter der Verdampferschale eine Heizeinheit angeordnet ist. Diese kann beispielsweise als Ohm'sche Widerstandsheizung ausgebildet sein. Es kann hier vorgesehen sein, dass die Verdampferschale aus Edelstahl ausgebildet ist und mit einem Rohrheizkörper verbunden ist. Dieser kann beispielsweise daran angelötet sein. Ebenso kann jedoch auch ein Dickschichtelement als Heizeinheit vorgesehen sein. Vorzugsweise ist bei einer derartigen Ausgestaltung mit einer Ohm'schen Widerstandsheizung ein elektrischer Anschluss an der Verdampfereinheit vorgesehen. Über diesen kann dann eine elektrische Energiezufuhr zum Aufheizen der Widerstandsheizung erfolgen.

Vorzugsweise ist bei einer derartigen Ausgestaltung das Gehäuse somit schützend um diese Heizung und die Verdampferschale herum angeordnet. Insbesondere ist das Gehäuse dann topfförmig ausgebildet und nimmt die Heizeinheit und die Verdampferschale auf, wobei die Heizeinheit dann unter der Verdampferschale angeordnet ist.

In einer alternativen Ausgestaltung kann vorgesehen sein, dass die Verdampfereinheit eine Verdampferschale aufweist, welche zumindest bereichsweise aus einem magnetischen Material ausgebildet ist. Dieses magnetische Material ist so konzipiert, dass es in Wechselwirkung mit einer wassertankexternen Induktionseinheit zum induktiven Aufheizen der Verdampferschale ausgebildet ist. Ein zusätzliches weiteres Gehäuse, in dem dann wie bei der vorherigen Ausführung eine Heizeinheit angeordnet ist, ist dann hier nicht mehr erforderlich. Gerade bei einer Ausgestaltung einer induktiven Heizung wird der Wassertank in einer Arbeitslage in dem Dampfgargerät über einer im Dampfgargerät fest eingebauten Induktionsspule platziert. Diese wird dann bestromt und in elektromagnetischer Wechselwirkung mit dem magnetisch erregbaren Material der Verdampferschale wird diese aufgeheizt, sodass das in der Verdampferschale befindliche Wasser, welches über dem Behälter in eine Verdampfereinheit einläuft verdampft wird.

Vorzugsweise ist vorgesehen, dass bei einer induktiven Heizung die Leerkocherkennung berührungslos erfolgt. Dies kann dahin geschehen, dass für die rückgekoppelten Signale in der Induktionsspule, die wassertankextern angeordnet ist, erkannt wird, ob die Verdampfereinheit leer ist oder nicht.

Bei einer Ausgestaltung mit einer Widerstandsheizung kann vorteilhaft an der Verdampferschale eine Temperaturschaltung oder ein Temperatursensor angebracht sein, um beim Leerkochen eine Überhitzung der Verdampfereinheit zu vermeiden und frühzeitig das Leerkochen detektieren zu können.

Durch die Ausgestaltung des Wassertanks kann ein Einsparen von Ventilen, Pumpen oder weiteren Klappen, wie sie bei herkömmlichen Ausgestaltungen erforderlich sind, erreicht werden. Darüber hinaus sind keine umfänglichen wasserdurchführenden Schläuche erforderlich, sondern es ist nur ein Dampfzuleitungsschlauch vorhanden. Darüber hinaus ist eine einfache Wasserbefüllung in ergonomisch günstiger, senkrechter Lage ermöglicht. Es wird dadurch ein Herausschwappen des Wassers aus dem Wassertank verhindert. Darüber hinaus ist eine gute Zugänglichkeit der Verdampfereinheit zur Reinigung und Entkalkung gewährleistet. Darüber hinaus ist ein vollständiges Leerkochen des Gesamtsystems ohne sicherheitskritische Zustände möglich. Es bleibt kein Restwasser zurück, das abgestanden oder gar faulig werden könnte.

Die Erfindung betrifft darüber hinaus auch ein Dampfgargerät mit einem erfindungsgemäßen Wassertank oder einer vorteilhaften Ausgestaltung davon. Der Wassertank ist zerstörungsfrei reversibel aus dem Dampfgargerät entnehmbar und wieder einsetzbar. Vorzugsweise ist vorgesehen, dass das Dampfgargerät frontseitig eine Bedienblende aufweist, welche bewegbar an dem Dampfgargerät angeordnet ist und in welche der Wassertank einsetzbar ist. Durch diese Ausgestaltung wird der Wassertank quasi in dem Dampfgargerät selbst versenkt angeordnet und verschwindet quasi hinter der Bedienblende. Bei geschlossener Bedienblende ist bei frontseitiger Betrachtung somit der Wassertank nicht erkennbar.

Vorzugsweise ist vorgesehen, dass die Bedienblende als herausziehbare Schublade ausgebildet ist, welche hinter einem Frontteil einen, insbesondere von oben bestückbaren, Aufnahmebereich für den Wassertank aufweist.

Der Wassertank wird in die ausgezogene Bedienblende, insbesondere in die herausgezogene Schublade von oben kommend in einen Aufnahmebereich eingesetzt. Mit dem Einschieben der Bedienblende, insbesondere der Schublade, erfolgt ein Kontaktieren sowohl des Dampfleitungssystems als auch von elektrischen Verbindungen zur Energieübertragung und/oder zur Datenübertragung. Die Datenübertragung kann dabei an eine Steuereinheit des Dampfsteuergeräts erfolgen, mittels der ein Zubereitungsvorgang und insbesondere auch die Beheizung der Verdampfereinheit steuerbar ist. Die Energiezufuhr kann elektrisch über Steckkontakte oder Induktion erfolgen.

Der Wassertank ist so konzipiert, dass er in der Einbaulage im Dampfgargerät quasi horizontal orientiert ist, in der dann auch das insbesondere vorgesehene Vogeltränkeprinzip funktioniert. Im herausgenommenen Zustand aus dem Dampfgargerät und zum Transportieren ist insbesondere aufgrund der Anordnung des Griffs die Lage senkrecht.

Vorzugsweise ist vorgesehen, dass die frontseitige Öffnung des Behälters, an welcher auch nach vorne hin anschließend die Verdampfeinheit angeordnet ist, die Befüllungsöffnung für das Einbringen von Wasser ist. Auch diesbezüglich ist somit eine Multifunktionalität gegeben, da somit über diese Öffnung sowohl das Befühlen erfolgt, als auch über diese Stirnseite des Behälters dann das Überlaufen des Wassers in die Verdampfereinheit durch das oben erwähnte Verbindungsloch erfolgt. Durch diese Ausgestaltung der Öffnung kann dieses sehr groß gestaltet werden, sodass auch die Befüllung sehr einfach und schnell ermöglicht ist.

Im Hinblick auf die Montage des Wassertanks ist vorgesehen, dass zunächst die Verdampferschale in den Adapterträger angeordnet wird und dann an einer Oberkante des zweiten Teilbereichs des Adapterträgers eine Dichtung angebracht wird, auf welcher dann der Deckel im geschlossenen Zustand aufliegt und abdichtet. Danach wird die Verdampfereinheit geschlossen, indem der Deckel über der Verdampferschale zugemacht und somit eine abdichtende Position erreicht ist.

Dies ist sowohl wasserdicht als auch im Wesentlichen gasdicht erzeugbar.

Das Dampfgargerät weist vorzugsweise eine Schublade auf, wobei der Wassertank in der Schublade anbringbar ist. Im eingesetzten Zustand ist der Wassertank in der Schublade angeordnet. Für eine derartige Ausgestaltung ist zum einen die Zugänglichkeit zum Wassertank besonders günstig und es kann darüber hinaus durch die Bewegbarkeit der gesamten Schublade eine aufgeräumte und mechanisch stabile Anbringung des Wassertanks gewährleistet werden. Ein entsprechendes Herausziehen und Hineinfahren der Schublade gewährleistet somit quasi auch noch mal eine zusätzliche Aufnahme einer Komponente die selbst bewegt werden kann, sodass auch beim Herausnehmen des Wassertanks unerwünschtes herauslaufen von Wasser vermieden werden kann.

Vorzugsweise ist vorgesehen, dass die Schublade horizontal verschiebbar ist und der Wassertank im ausgezogenen Zustand der Schublade von oben zugänglich ist. Durch diese Ausgestaltung werden die oben genannten Vorteile noch verbessert. Darüber hinaus kann durch eine derartige Ausgestaltung die Frontseite des Dampfgargeräts mit der Frontseite der Schublade unterbrechungsfrei gestaltet werden und es ist quasi die Frontseite der Schublade nicht mehr mit einer Öffnung für den Wassertank versehen. Nicht zuletzt wird durch dieses Konzept auch die Handhabung des Wassertanks im Hinblick auf tropffreies Nachfüllen und dergleichen begünstigt.

Vorzugsweise ist vorgesehen, dass der Wassertank lösbar in der Schublade angeordnet ist, insbesondere nach oben entnehmbar ist. Gerade bei einer derartigen Separierbarkeit des Wassertanks von der Schublade ist das prinzipielle Konzept mit einer zusätzlichen Komponente, die darüber hinaus auch noch bewegbar und zur Aufnahme des Wassertanks angeordnet ist, besonders vorteilhaft. Das Entnehmen nach oben und nach unten ist darüber hinaus nutzerfreundlicher. Insbesondere ist durch die verbesserte Einsicht auf den gesamten Einsatzbereich des Wassertanks in der Schublade mit zielgerichteter Einführung möglich. Insbesondere wird dann auch das Heraustropfen und Auslaufen von Wasser aus dem Gerät bei Entnahme oder beim Einsetzen des Wassertanks aus der beziehungsweise in die Schublade vermieden.

Vorzugsweise ist vorgesehen, dass die Schublade einen, insbesondere passgenauen, Aufnahmebereich für den Wassertank aufweist. Die positionsfixierte Anordnung in der Schublade kann dadurch gewährleistet werden und ein unerwünschtes Verrutschen des Wassertanks kann vermieden werden.

Vorzugsweise ist vorgesehen, dass zumindest eine Wand des Aufnahmebereichs an ihrem oberen Abschnitt einen nach außen geneigten Wandabschnitt aufweist. Durch eine derartige Ausgestaltung kann das Einsetzen des Wassertanks von oben verbessert werden, da gerade bei passgenauen Anordnungen in der Endposition des Wassertanks in der Schublade durch diese Schrägflächen quasi eine gewisse trichterartige Führung in den Aufnahmebereich gewährleistet ist. Ein unerwünschtes Verklemmen oder Verspreizen und ein Beschädigen des Wassertanks oder der Schublade kann dadurch vermieden werden.

Vorzugsweise ist vorgesehen, dass zumindest zwei gegenüberliegende Wände an ihren oberen Abschnitten einen geneigten Wandabschnitt aufweisen. Die oben genannten Vorteile können dadurch nochmals verbessert werden.

Vorzugsweise ist vorgesehen, dass der Wassertank einen, insbesondere bewegbaren, Griff aufweist. Die Entnahme und das Einsetzen ist dadurch noch nutzerfreundlicher und genauer möglich.

Vorzugsweise ist der Griff durch eine Klappeinheit automatisch von einer eingeklappten in eine ausgeklappte Stellung bringbar. Der Nutzer muss daher nicht selbst den Griff in der eingeklappten Position in die ausgeklappte Position verbringen, was gerade bei schwer zugänglichen eingeklappten Stellungen des Griffs dann besonders vorteilhaft und nutzerfreundlich ist.

Vorzugsweise ist vorgesehen, dass der Griff im geschlossenen Zustand der Schublade in der eingeklappten Stellung angeordnet und durch das Anliegen des Griffs an einer Innenwand des Dampfgargeräts in der eingeklappten Stellung gehalten ist. Insbesondere ist beim Herausziehen der Schublade das Anliegen an der Innenwand freigegeben und der Griff ist durch die Klappeinheit automatisch nach oben in die ausgeklappte Stellung verbringbar. Somit wird in Funktionalität der Klappeinheit sowie der gezielten Ausgestaltung und Anordnung des Wassertanks bei der Bewegungsführung zum Herausziehen der Schublade und dem dann Entnehmen des Wassertanks ein besonders vorteilhaftes automatisierendes Prinzip geschaffen. Auch dies ist dahingehend begünstigt, dass ein Klemmen oder Verspreizen vermieden ist und das Überführen von dem eingeklappten Positionszustand in den ausgeklappten Positionszustand quasi kontinuierlich und nicht schnalzend erfolgt.

Vorzugsweise ist der Griff in seiner ausgeklappten Position in einer Vertikalstellung, sodass das Greifen und Entnehmen des Wassertanks aus der Schublade nach oben für einen Nutzer besonders leichtgängig erfolgt.

Vorzugsweise ist vorgesehen, dass der in der ausgeklappten Stellung befindliche Griff beim Einschieben der Schublade in das Dampfgargerät an der Innenwand kontaktiert und beim weiteren Einschieben automatisch in die eingeklappte Stellung bringbar ist und an der Innenwand anliegt. Vorzugsweise klappt somit der Griff von der vorzugsweise vertikalen ausgeklappten Stellung beim weiteren horizontalen Einschieben der Schublade in das Dampfgargerät durch den Anschlag an der Frontkante und dann an der Innenwand automatisch nach vorne in die horizontale eingeklappte Stellung. Dies ist eine besonders begünstigte Bewegungsführung für die automatische Verbringung des Griffs in die eingeklappte Stellung.

Vorzugsweise ist vorgesehen, dass die Klappeinheit eine Feder umfasst, insbesondere eine Feder ist. Diese ist insbesondere so befestigt und angeordnet, dass der Griff quasi automatisch in die ausgeklappte Stellung gebracht werden würde. Befindet sich der Griff in der eingeklappten Stellung, so wird dabei quasi die Feder in einen vorgespannten Zustand verbracht, die den Griff entgegen dieser Stellung nach außen drücken möchte und in die ausgeklappte Stellung überführen möchte. Gerade im geschlossenen Zustand der Schublade und beim Anliegen des Griffs an der Innenwand wird somit dieser Vorspannung entgegengewirkt.

Vorzugsweise ist vorgesehen, dass ein Andockstutzen des Wassertanks zum Koppeln mit einem Leitungssystem zum Zuführen des Wassers in den Garraum zur dortigen Verdampfung oder zum Zuführen des garraumextern erzeugten Dampfs zum Garraum im vollständig eingeschobenen Zustand der Schublade mit einem Andockbereich des Leitungssystems gekoppelt ist. Es wird also beim Einsetzen des Wassertanks in die herausgezogene Schublade noch keine derartige Kopplung des Andockstutzens mit dem Andockbereich erreicht. Da diesbezüglich ein praktisch vertikaler Bewegungsablauf erfolgt und im Hinblick auf die Andockung eine axiale Anbindung besonders vorteilhaft ist, kann die oben genannte vorteilhafte Ausführung sehr gezielt geführt dann erreicht werden, wenn die Schublade in horizontaler geradliniger Bewegung nach innen geschoben wird und dadurch dann das gewünschte axiale Andocken des Andockstutzens mit dem Andockbereich sehr präzise erfolgen kann.

Vorzugsweise ist vorgesehen, dass in die Frontwand der Schublade zumindest ein Bedienelement und/oder eine Anzeigeeinheit einer Bedienvorrichtung des Dampfgargeräts integriert ist und frontseitig angeordnet und zugänglich ist. Dies ist eine besonders hervorzuhebende Ausführung, da dadurch die Schublade quasi multifunktionell ausgebildet ist und als Träger für mehrere unterschiedliche Funktionseinheiten des Dampfgargeräts dient. Zum einen kann dadurch eine besonders kompakte Ausgestaltung für die Komponenten erzielt werden. Darüber hinaus kann die Frontwand der Schublade zur Aufnahme der Bedienvorrichtung herangezogen werden. Gerade dann, wenn ein Dampfgargerät bereitgestellt ist, welches ohnehin eine Bedienblende mit einer Bedienvorrichtung aufweist, dient bei dieser Ausgestaltung die Frontwand der Schublade als derartige Bedienblende mit der Bedienvorrichtung.

Vorzugsweise ist vorgesehen, dass sich die Schublade über die gesamte Breite des Dampfgargeräts erstreckt. Dadurch kann gerade bei sehr großen Bedienvorrichtungen dies vorteilhaft zur Aufnahme von zumindest Teilelementen der Bedienvorrichtung dienen, die dann auch noch übersichtlich und nutzerfreundlich bedienbar positioniert werden können. Darüber hinaus kann durch eine derartig groß dimensionierte Schublade auch ein besonders großer Wassertank aufgenommen werden.

Gerade bei Ausgestaltungen, bei denen auch eine Bedienvorrichtung in die Schublade integriert wird und quasi als Bedienblende dient, kann der dahinter angeordnete Bauraum durch die Verbringung und Anbringung des Wassertanks gegenüber herkömmlichen Ausgestaltungen von Hausgeräten und Dampfgargeräten mit nur einer Bedienblende zusätzlich genutzt werden.

Vorzugsweise ist vorgesehen, dass die Schublade über einem Garraum und über einer Tür zum Verschließen des Garraums angeordnet ist.

Vorzugsweise ist vorgesehen, dass die Schublade in ihrer vollständig eingeschobenen Endposition und ihrer vollständig ausgezogenen Endposition verschiebefixiert angeordnet ist. Auch bei einem leichten Anstoßen eines Nutzers und beim Entnehmen oder Einsetzen des Wassertanks kann diese Schublade dann nicht unerwünschter Weise verrutschen oder sich verschieben, sodass ein derartiger Entnahmevorgang oder Einsatzvorgang nicht behindert wird. Besonders vorteilhaft ist diese Ausführung jedoch dann, wenn an der Frontwand der Schublade die Bedienvorrichtung angeordnet ist. Ist diese Schublade dann im ausgezogenen Zustand und positionsfixiert beziehungsweise verschiebefixiert, kann die Bedienvorrichtung, insbesondere ein Bedienelement jederzeit durch Drücken, oder Drehen oder dergleichen bedient werden, ohne dass sich die Schublade nach innen verschiebt und dadurch die Bedienung beeinträchtigt werden würde.

Vorzugsweise ist vorgesehen, dass die Schublade durch eine Halteeinrichtung verschiebefixiert positioniert ist. Beispielsweise können hier eine Verrastmechanik oder eine Verriegelungsmechanik vorgesehen sein. Es kann vorgesehen sein, dass im eingefahrenen Zustand der Schublade ein Herausfahren dahingehend bewirkbar ist, dass eine Halteeinrichtung durch eine Drück-Zieh-Mechanik (Push-Pull-Mechanik) betätigbar ist. Es kann jedoch auch vorgesehen sein, dass eine einfache Entriegelungstaste vorgesehen ist, mit der die verschiebefixierte Position entriegelt werden kann und dann manuell durch einen Nutzer die Schublade hin und her geschoben werden kann.

Besonders vorteilhaft ist vorgesehen, dass das Dampfgargerät einen Motor aufweist, durch welchen die Bewegung der Schublade automatisch angetrieben erfolgen kann. Vorzugsweise ist dann auch noch eine Bewegungsdämpfungsvorrichtung vorgesehen, dass ein unerwünschtes hartes Einschlagen an den Endpositionen der Schublade vermieden werden kann. Dadurch kann insbesondere bei dem Vorhandensein einer Bedienvorrichtung ein Beschädigen dieser Elektronik vermieden werden.

Vorzugsweise ist vorgesehen, dass die Verdampfereinheit des Gargeräts in der Schublade angeordnet ist. Auch bei einer derartig im Garraum extern angeordneten Verdampfereinheit ist somit in Bauraum minimierender Weise die Schublade als zusätzlicher Aufnahmeträger vorgesehen. Insbesondere kann vorgesehen sein, dass die Verdampfereinheit in dem Wassertank selbst angeordnet ist. Der zu erzeugende Dampf kann dann in besonders vorteilhafter Weise über das Leitungssystem in den Garraum zugeführt werden.

Es kann vorgesehen sein, dass das Dampfgargerät eine Energieversorgungseinheit aufweist, die zur elektrischen oder thermischen Energieübertragung an die Verdampfereinheit, die in der Schublade oder dem Wassertank angeordnet ist, extern zur Schublade angeordnet ist. Insbesondere ist vorgesehen, dass eine Energieübertragung von dieser Energieversorgungseinheit zur Verdampfereinheit erst in der eingeschobenen Endposition der Schublade durchführbar ist. Es kann hier vorgesehen sein, dass eine elektrische Energieversorgung für die Verdampfereinheit erfolgt, in dem dies drahtgebunden stattfindet und elektrische Kontakte an der Verdampfereinheit in der Endposition der Schublade mit elektrischen Kontakten der Energieversorgungseinheit kontaktieren.

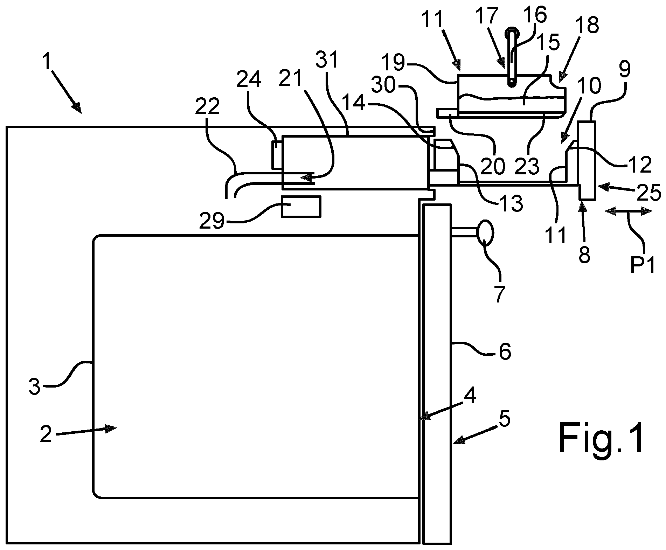

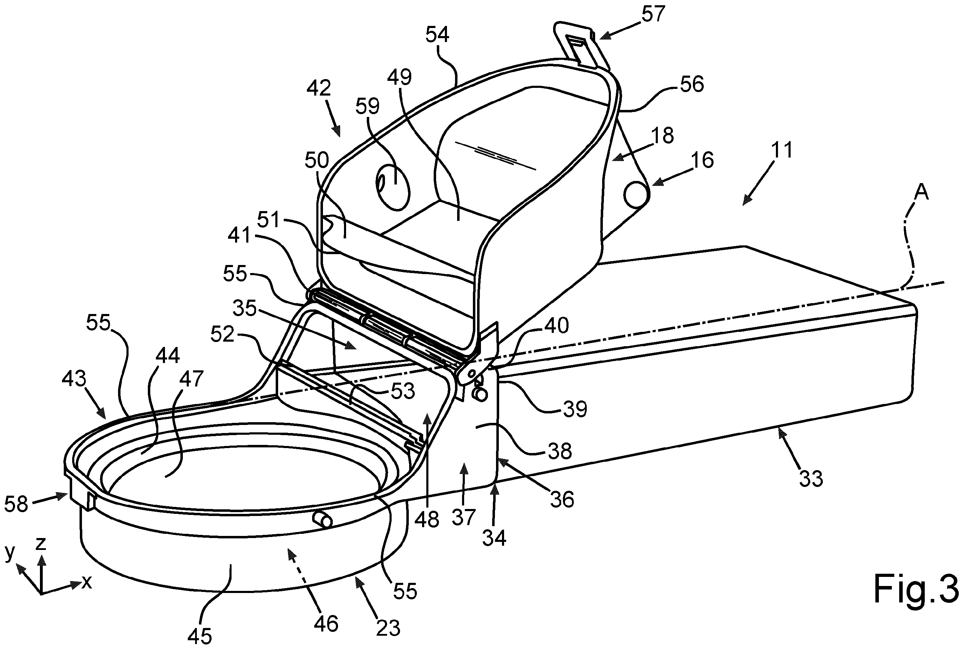

Es kann jedoch auch vorgesehen sein, dass diesbezüglich eine drahtlose Energieübertragung erfolgt. Insbesondere ist es auch möglich, dass in der Endlage der Schublade im eingeschobenen Zustand elektrische Energie von einer schubladenextern angeordneten Induktionsspule zur Verdampfereinheit übertragbar ist. Ebenso kann vorgesehen sein, dass in der Endlage im eingeschobenen Zustand der Schublade eine extern zur Schublade angeordnete Heizeinrichtung aktiviert wird und thermische Energie, beispielsweise in Form von Kontakt- oder Strahlungswärme, auf die Verdampfereinheit übertragen wird und dann durch diesbezügliche Erwärmung das Wasser in dem Wassertank verdampft wird.
Im Hinblick auf das Überführen der im ausgefahrenen Zustand befindlichen Schublade in die vollständig eingefahrene Endlage kann vorgesehen sein, dass dies durch einen Nutzer geführt erfolgt und beispielsweise gegen ein Vorspannelement, beispielsweise eine Feder, erfolgt, sodass mit dem Hineinschieben eine Gegenkraft durch die Feder erzeugt wird. Auch dadurch wird ein unerwünschtes hartes Anschlagen der Schublade in der eingeschobenen Endlage vermieden. Es kann auch vorgesehen sein, dass die Schublade in der verschiebefixierten vollständig ausgezogenen Endlage zunächst entriegelt wird und dann einfach durch einen Nutzer hinein geschoben wird. Ebenfalls kann jedoch auch durch beispielsweise Betätigen einer Taste, ein Motor gestartet werden, der dann automatisch über den Motorantrieb die Schublade in die Endlage einfährt.
Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in den jeweils angegebenen Kombination sondern auch in anderen Kombinationen oder in Alleinstellung verwendbar, ohne den Rahmen der Erfindung zu verlassen. Die Figuren 1 - 8 zeigen Beispiele von Wassertanks, wobei nur die Figuren 3 -8 Ausführungsbeispiele der Erfindung zeigen. Es zeigen:
- Fig. 1: eine schematische Darstellung eine Ausführungsbeispiels eines Dampfgargeräts mit ausgezogener Schublade und entnommenen Wassertank;
- Fig. 2: eine perspektivische Darstellung eines Teilausschnitts des Dampfgargeräts mit geöffneter Schublade und eingesetztem Wassertank;
- Fig. 3: eine perspektivische Darstellung eines Ausführungsbeispiels eines erfindungsgemäßen Wassertanks;

- Fig. 4: eine perspektivische Darstellung des Wassertanks gemäß Fig. 3 im geschlossenen Zustand des Deckels;
- Fig. 5: eine Seitenansicht des Wassertanks in der Darstellung gemäß Fig. 4;
- Fig. 6: eine Schnittdarstellung des Wassertanks gemäß Fig. 4 und 5;
- Fig. 7: eine vergrößerte Darstellung eines Teilausschnitts in Fig. 6; und
- Fig. 8: eine weitere Schnittdarstellung des Wassertanks gemäß der Darstellung in Fig. 4.

In den Figuren werden gleiche und funktionsgleiche Elemente mit den gleichen Bezugszeichen versehen.

In Fig. 1 ist in einer vereinfachten schematischen Schnittdarstellung ein Dampfgargerät 1 gezeigt, welches einen Garraum 2 aufweist. Der Garraum 2 ist durch eine Muffel 3 begrenzt, wobei frontseitig eine Beschickungsöffnung 4 ausgebildet ist, die durch eine Tür 5 verschließbar ist. Die Tür 5 weist an ihrer Außenseite 6 einen Griff 7 auf.

In dem Garraum 2 kann Gargut eingebracht werden, welches durch Dampf zubereitet werden kann.

Im Ausführungsbeispiel über der Tür 5 ist eine Schublade 8 ausgebildet, welche in horizontaler Richtung gemäß der Pfeildarstellung P1 herausgezogen und wieder eingeschoben werden kann. Die Schublade 8 weist ein Frontteil 9 auf, welches sich im Ausführungsbeispiel vorzugsweise über die gesamte Breite des Dampfgargeräts 1 erstreckt. Das Frontteil 9 bildet zugleich auch die Frontblende des Dampfgargeräts 1.

In der Schublade 8 ist ein Aufnahmebereich 10 ausgebildet, in den ein Wassertank 11 reversibel lösbar und somit entnehmbar und wieder einsetzbar angebracht werden kann. Der Aufnahmebereich 10 weist eine vordere Wand 32 auf, die an ihrem oberen Ende einen schräg nach außen geneigten Wandabschnitt 12 aufweist. Entsprechend weist auch die gegenüberliegende hintere Wand 13 einen an ihrem oberen Ende schräg nach außen laufenden Wandabschnitt 14 auf. Durch diese Wände 32 und 13 kann der Wassertank 11 passgenau und positionsfixiert in den Aufnahmebereich 10 eingebracht werden. Durch die schrägen Wandabschnitte 12 und 14 wird sowohl das Einführen als auch das Herausnehmen in diesen passgenauen Aufnahmebereich 10 begünstigt.

In dem Wassertank 11 ist Wasser 15 enthalten. Dieses wird im Betrieb des Dampfgargeräts 1 verdampft, wobei der Dampf dann im Garraum 2 zum Zubereiten des Garguts enthalten ist.

Wie zu erkennen ist, umfasst der Wassertank 11 einen Griff 16, welcher relativ zum Behälter mit dem Wasser 15 bewegbar ist. Insbesondere kann er in der in Fig. 1 gezeigten vollständig ausgeklappten und vertikalen Position nach vorne in eine vollständig eingeklappte Position verschwenkt werden. Dazu ist im Ausführungsbeispiel eine nicht näher gezeigte Feder 17 vorgesehen. Mittels dieser Feder 17 wird der Griff 16 ausgehend von dem vollständig eingeklappten Zustand beziehungsweise der eingeklappten Stellung in die in Fig. 1 gezeigte ausgeklappte Stellung automatisch gebracht.

Wie zu erkennen ist, ist an einem vorderen Bereich des Wassertanks 11 eine Mulde 18 ausgebildet, in der dann der vertikale Bügelteil des Griffs 16 im eingeklappten Zustand aufgenommen ist. Dadurch kann der Griff 16 quasi auch versenkt und nicht über die Oberseite des Wassertanks 11 überstehend positioniert werden.

An einer Rückwand 19 des Wassertanks 11 ist ein Andockstutzen 20 ausgebildet. Dieser wird im vollständig eingebrachten Zustand des Wassertanks 11 in die Schublade 8 und im vollständig eingeschobenen Zustand der Schublade 8 in das Dampfgargerät 1 mit einem Andockbereich 21 eines Leitungssystems 22 gekoppelt. Das Leitungssystem 22 kann in einer ersten Ausführung dazu ausgebildet sein, dass das Wasser 15 von dem Wassertank 11 in eine in dem Garraum 2, insbesondere in einem Boden der Muffel 3 ausgebildete Verdampferschalle geleitet wird. Unter dieser Verdampferschale kann dann ein Heizkörper angeordnet sein, der die Verdampferschale erhitzt und dadurch das in dem Garraum eingebrachte Wasser verdampft wird.

Vorzugsweise ist im Ausführungsbeispiel vorgesehen, dass in der Schublade 8, insbesondere in dem Wassertank 11 selbst eine Verdampfereinheit 23 ausgebildet ist.

Dadurch kann vorgesehen sein, dass in der Schublade 8 bereits entsprechend das Wasser 15 im Tank 11 verdampft wird und dann über das Leitungssystem 22 der Dampf direkt in den Garraum 2 geleitet wird.

Ist die Verdampfereinheit 23 in der Schublade 8 beziehungsweise in dem Wassertank 11 selbst angeordnet, so ist eine elektrische Energiezuführung drahtlos oder aber auch drahtgebunden möglich. Vorzugsweise ist vorgesehen, dass an der Außenseite des Wassertanks 11 angebrachte elektrische Kontakte erst im vollständig eingeschobenen Zustand der Schublade 8 mit in Dampfgargerät 1 angeordneten weiteren elektrischen Kontakten kontaktiert werden und dann eine Energieübertragung von einer Energieversorgungseinheit 24 zur Verdampfereinheit 23 erfolgen kann.

Es kann auch vorgesehen sein, dass diesbezüglich eine Induktionsspule schubladenextern angeordnet ist und über diese Induktionsspule Energie in die Schublade 8 übertragbar ist.

Ebenso kann vorgesehen sein, dass schubladenextern ein Heizkörper angeordnet ist, der im vollständig eingeschobenen Zustand der Schublade 8 direkt oder sehr nah benachbart zum Wassertank 11 angeordnet ist. Durch Aufheizen dieser Heizeinheit kann dann thermische Energie auf den Wassertank 11 übertragen werden und das darin befindliche Wasser 15 erhitzt und verdampft werden.

Wie aus der Darstellung in Fig. 1 zu erkennen ist, ist in der vollständig ausgezogenen Endlage der Schublade 8 der Aufnahmebereich 10 von oben zugänglich und es kann der Wassertank 11 dann in diesen Aufnahmebereich 10 von oben eingeführt werden. Entsprechend kann daraus der Wassertank 11 nach oben einfach herausgezogen werden.

Des Weiteren ist vorgesehen, dass das Dampfgargerät 1 eine Halteeinrichtung aufweist. Mit dieser kann die Schublade 8 in ihrer vollständig ausgezogenen Endlage, wie sie in Fig. 1 gezeigt ist, schiebefixiert beziehungsweise positionsfixiert werden. Dies bedeutet, dass in diesem vollständig ausgezogenen Zustand ein Einschieben in horizontaler Richtung nicht mehr möglich ist, ohne dass dies durch Freigabe der Halteeinrichtung bewusst herbeigeführt wird.

Dies ist insbesondere dann vorteilhaft, um ein sicheres Einsetzen oder Entnehmen des Wassertanks 11 zu gewährleisten, ohne dass die Schublade 8 schon wieder teilweise eingeschoben wird, und dadurch der Einsatzvorgang oder Entnahmevorgang des Wassertanks 11 behindert wird.

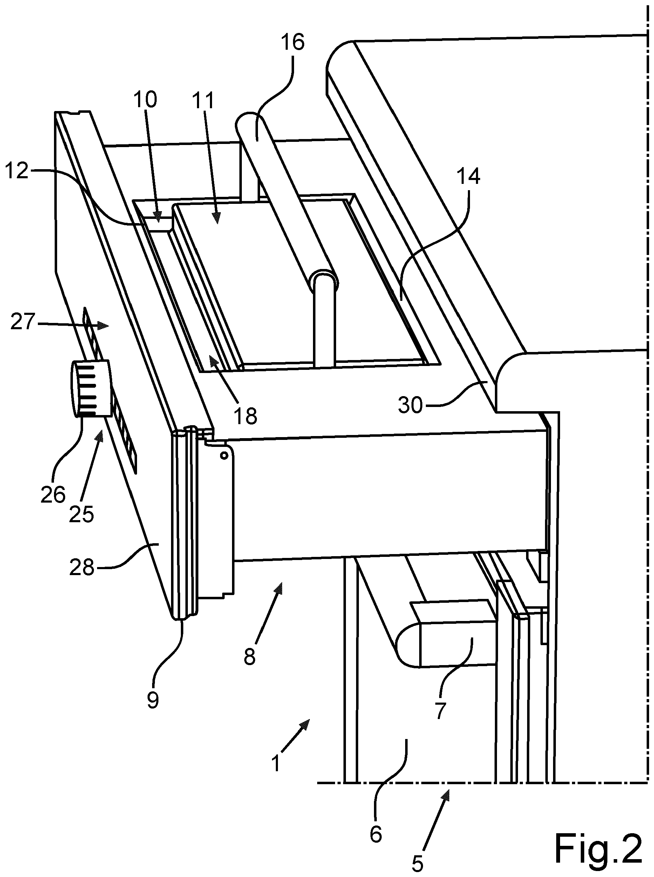

Besonders vorteilhaft ist diese Halteeinrichtung und Verschiebefixierung der Schublade 8 dann, wenn das Frontteil 9 eine Bedienvorrichtung 25 zum Bedienen des Dampfgargeräts 1 integral aufweist. Diese Bedienvorrichtung 25 kann vorzugsweise zumindest ein Bedienelement 26 (Fig. 2) und eine Anzeigeeinheit 27 aufweisen, die über eine Frontseite 28 des Frontteils 9 zugänglich sind und betätigbar sind beziehungsweise einsehbar sind.

Wird dann in der in Fig. 1 gezeigten ausgezogenen Stellung der Schublade 8 eine Bedienung der Bedienvorrichtung 25 gewünscht, so ist dies besonders präzise und sicher und auch nutzerfreundlich durchführbar, da diese ausgezogene Stellung verschiebefixiert ist.

Wie bereits erwähnt und erläutert, ist im Ausführungsbeispiel vorgesehen, dass sich die Schublade 8 über der Tür 5 und auch dem Garraum 2 befindet.

Die angesprochene Halteeinrichtung zur verschiebefixierten Positionierung der Schublade 8 in der vollständig ausgezogenen Stellung gemäß Fig. 1 also auch in der vollständig eingeschobenen Stellung gemäß Fig. 2 kann eine so genannte Push-Pull-Mechanik sein.

Es kann auch vorgesehen sein, dass an der Frontseite 28 des Frontteils 9 eine Entriegelungstaste angeordnet ist. Durch deren Betätigung kann die Verschiebefixierung aufgehoben werden.

Es kann vorgesehen sein, dass das hin und her schieben der Schublade 8 gemäß der Pfeilrichtung P1 durch den Nutzer selbst durchgeführt werden muss beziehungsweise kann. Es kann insbesondere jedoch auch vorgesehen sein, dass das Dampfgargerät 1 einen Motor 29 aufweist, mit dem die Bewegungsführung der Schublade 8 automatisch angetrieben erfolgt.

Im Hinblick auf das weitere Vorgehen ausgehend von der Darstellung in Fig. 1 wird dann der Wassertank 11 in den Aufnahmebereich 10 eingesenkt. Ist er dort in seiner endgültigen Lage verbracht, wird die Schublade 8 in horizontaler Richtung eingeschoben, bis sie in der Endlage gemäß der Darstellung in Fig. 2 sich befindet. Während dieses Einschubvorgangs wird der zunächst vertikal nach oben stehende Griff 16 an einer Vorderkante 30 der Gehäusefront kontaktiert und gegen die Kraft der Feder 17, die eine Klappeinheit darstellt, nach vorne gedrückt. Dies erfolgt automatisch auf dem weiteren Einschubvorgang der Schublade 8, sodass dann im vollständig eingeschobenen Zustand gemäß der Darstellung in Fig. 2 der Griff 16 an einer Innenwand 31 (Fig. 1) anliegt und durch diese am Nachobenklappen gehindert wird. Beim Herausziehen der Schublade 8 ausgehend von der eingeschobenen Stellung in Fig. 2 wird durch die vorgespannte Feder 17 der Griff 16 automatisch nach oben geschwenkt, sobald er über diese Vorderkante 30 heraussteht und somit nicht mehr durch die Innenwand 31 nach unten gehalten wird.
In dieser perspektivischen Darstellung in Fig. 2 ist ein Teilausschnitt des Dampfgargeräts 1 gezeigt, wobei dabei die vollständig ausgezogene Stellung der Schublade 8 dargestellt ist und der in den Aufnahmebereich 10 eingesetzte Wassertank 11 mit dem ausgeklappten Griff 16 zu erkennen ist. Die Bedienvorrichtung 25 ist in beispielhafter Ausführung gezeigt. Wie in Fig. 2 zu erkennen ist, erstreckt sich die Schublade 8 über die gesamte Breite des Dampfgargeräts 1.
Es kann auch vorgesehen sein, dass der Motor 29 in der Schublade 8 angeordnet ist.
In Fig. 3 ist in einer perspektivischen Ansicht eine detailliertere Darstellung eines Ausführungsbeispiels eines erfindungsgemäßen Wassertanks 11 gezeigt. Dieser Wassertank 11 kann ebenfalls in dem Aufnahmebereich 10 eingesetzt werden. Die dazu oben dargelegten Erläuterungen zu Fig. 1 und Fig. 2 gelten hier analog.
Der Wassertank 11 umfasst einen Behälter 33, welcher zur Aufnahme des Wassers ausgebildet ist. Im Ausführungsbeispiel ist der Behälter 33 als Quader ausgebildet. An einem vorderen Ende 34 ist die Verdampfereinheit 23 nach vorne hin anschließend an den Behälter 33 angeordnet. Die beiden Komponenten, der Behälter 33 einerseits und die Verdampfereinheit 23 andererseits bilden als Einheit den Wassertank 1. Die Verdampfereinheit 23 ist somit in Längsrichtung des Wassertanks 1 entlang der Längsachse A betrachtet in Reihe zu dem Behälter 33 angeordnet und bildet nach vorne hin quasi eine Verlängerung des Behälters 33. An dem vorderen Ende 34 ist der Behälter 33 vollständig offen ausgebildet und es ist keine begrenzende vertikale Stirnwand vorhanden. Der Behälter 33 weist dort somit eine Öffnung 35 auf. An eine diese Öffnung 35 umfangsseitig begrenzende Kante bzw. einen Rand 36 anschließend ist ein Adapterträger 37 angeordnet. Dieser weist einen ersten Teilbereich 38 auf, der einen rahmenartigen Flansch 39 aufweist. Dieser ist zum kompatiblen Aufstecken auf den Rand 36 ausgebildet.

Insbesondere sind im miteinander verbundenen Zustand des Behälters 33 und des Adapterträgers 37 eine bündige und stufenfreie Anordnung der Außenseiten des ersten Teilbereichs 38 und der Außenseite des Behälters 33 vorgesehen.

Der rahmenartige Flansch 39 weist an seiner oberen Dachwand 40 eine Aufnahme für eine horizontale Drehachse 41 auf. An dieser Drehachse 41 ist ein Deckel 42 schwenkbar gelagert. Im Ausführungsbeispiel gemäß Fig. 3 ist der Deckel 42 in seiner vollständig geöffneten Lage gezeigt.

Der Deckel 42 ist einstückig ausgebildet, insbesondere als Kunststoff. Der Adapterträger 37 ist ebenfalls als einstückiges Bauteil aus Kunststoff ausgebildet.

Wie zu erkennen ist, erstreckt sich die Fläche der Öffnung 35 und somit auch die Fläche des rahmenartigen Flansches 39 in einer vertikalen Ebene und somit in einer y-z-Ebene.

Der Adapterträger 37 umfasst darüber hinaus einen zweiten Teilbereich 43, der zur Aufnahme einer Verdampferschale 44 der Verdampfereinheit 23 ausgebildet ist. Der zweite Teilbereich 43 ist im Ausführungsbeispiel topfförmig und mit einem runden Querschnitt konzipiert. Die Verdampferschale 44 ist in einem Gehäuse 45, welches in dem Adapterträger 37, insbesondere im zweiten Teilbereich 43 angeordnet ist, angeordnet. Es kann auch vorgesehen sein, dass das Gehäuse 45 integral einstückig mit dem Adapterträger 37, insbesondere im zweiten Teilbereich 43, ausgebildet ist.

Es kann vorgesehen sein, dass in diesem Gehäuse 45 unter der Verdampferschale 44 eine Heizeinheit 46 angeordnet ist. Die Heizeinheit 46 kann insbesondere als Widerstandsheizung ausgebildet sein und beispielsweise ein Rohrheizkörper sein. Dieser kann an die Verdampferschale 44 von unten angebracht, insbesondere angelötet sein. Vorzugsweise ist die Verdampferschale 44 dann aus Edelstahl ausgebildet.

In einer alternativen Ausführung kann vorgesehen sein, dass die Verdampferschale 44 aus einem magnetisch erregbaren Material ausgebildet ist. Bei einer derartigen Ausgestaltung kann dann vorgesehen sein, dass kein Gehäuse 45 vorhanden ist, sondern dass lediglich dann, wenn der Wassertank 11 in seiner Endlage im Dampfgargerät 1 angeordnet ist, die Verdampferschale 44 benachbart, insbesondere oberhalb einer Induktionsspule angeordnet ist, über welche die Verdampferschale 44 dann elektromagnetisch beaufschlagbar und heizbar ist.

Wie aus der Darstellung in Fig. 3 zu erkennen ist, ist die Einheit mit dem Behälter 33 und der Verdampfereinheit 23 so miteinander verbunden und angeordnet, dass die Verdampferschale 44 mit ihrem Boden 47 in vertikaler Richtung und somit in z-Richtung tiefer liegt als ein Boden 48 des Behälters 33. Der Wassertank 11 ist dahingehend konzipiert, dass im geschlossenen Zustand des Deckels 42 eine vollständige Dichtheit gegeben ist und der Wassertank 11 gemäß dem Vogeltränkeprinzip arbeitet. Dies bedeutet, dass das in dem Behälter 33 befindliche Wasser über eine in Fig. 3 nicht gezeigte lochartige Öffnung nur dann in die Verdampfereinheit 23 und insbesondere in die Verdampferschale 44 läuft, wenn das Befüllungsniveau in der Verdampferschale 44 unter ein bestimmtes Level absinkt. Dieses Level ist durch die Oberkante dieser lochartigen Öffnung definiert, sodass bei Unterschreiten dieses Füllstands Luft in das Loch eindringen kann und durch das Loch in den Behälter 33 wandert, wobei dadurch gleichzeitig Wasser von dem Behälter 33 durch das Loch in die Verdampfereinheit 23 tropfen kann. Dies wird insbesondere dadurch bewirkt, dass die Verdampfereinheit 23 und der Behälter 33 nach außen hin dicht abgeschlossen sind.

Wie zu erkennen ist, erstreckt sich der Querschnitt des zweiten Teilbereichs 43 in der x-y-Ebene und steht somit quasi senkrecht zur Ebene des Querschnitts der Öffnung 35.

Im geschlossenen Zustand des Deckels 42 kann mit diesem einzigen Bauteil eine Separierung der Kammer des Behälters 33 von der Kammer der Verdampfereinheit 23 erreicht werden. Der Deckel 42 ist so angeordnet und geformt, dass er einerseits dann die Öffnung 35, die sich in einer vertikalen Ebene bildet, und gleichzeitig die Verdampfereinheit 23 von oben abdeckt.

Der Deckel 42 weist an seiner Innenseite 49 eine Verschlusswand 50 auf. Diese Verschlusswand 50 ist an ihrem vorderen freien Ende gebogen ausgebildet und weist eine zumindest bereichsweise gekrümmte Frontkante 51 auf. Im geschlossenen Zustand des Deckels 42 ist diese Frontkante 51 in eine Aufnahmenut 52 eingeführt. Die Aufnahmenut 52 ist im Hinblick auf den Formverlauf an den Formverlauf der Frontkante 51 angepasst. Die Aufnahmenut 52 ist zwischen der Öffnung 35 und dem zweiten Teilbereich 43 des Adapterträgers 37 angeordnet.

Vorzugsweise ist in dieser Aufnahmenut 52 eine Dichtung 53 angeordnet, welche insbesondere eine Silikondichtung ist.

Der Deckel 42 ist somit funktionell auch eine frontseitige Abdeckklappe für die Öffnung 35.

Des Weiteren ist vorgesehen, dass ein unterer Rand 54 des Deckels 42 in eine Aufnahmenut 55 des ringförmig ausgebildeten zweiten Teilbereichs 43 des Adapterträgers 37 eingreift, wenn der Deckel 42 geschlossen ist.

Auch hier ist vorgesehen, dass in der Aufnahmenut 55 eine Dichtung angeordnet ist.

Die Aufnahmenut 55 ist gemäß der Darstellung in Fig. 3 vollständig umlaufend ausgebildet und erstreckt sich somit auch im ersten Teilbereich 38 auf der abgewandten Seite zum Behälter 33.

Des Weiteren ist vorgesehen, dass die Aufnahmenut 52 in die Aufnahmenut 55 mündet.

An einer Außenseite 56 des Deckels 42 ist im vorliegenden Ausführungsbeispiel ein feststehender Griff 16 angeordnet. Dieser ist in einer Mulde 18 angeordnet.

Darüber hinaus ist vorgesehen, dass der Deckel 42 zumindest ein Rastelement 57 aufweist, welches als Rastbügel ausgebildet ist. Dieses Rastelement 57 ist im geschlossenen Zustand des Deckels 42 zum Verrasten mit einem komplementären Rastelement 58, welches am zweiten Teilbereich 43 ausgebildet ist, vorgesehen.

Darüber hinaus ist im Deckel 42 zumindest ein Dampfauslassstutzen 59 ausgebildet. Dieser ist zur Kopplung mit einem Dampfleitsystem ausgebildet.

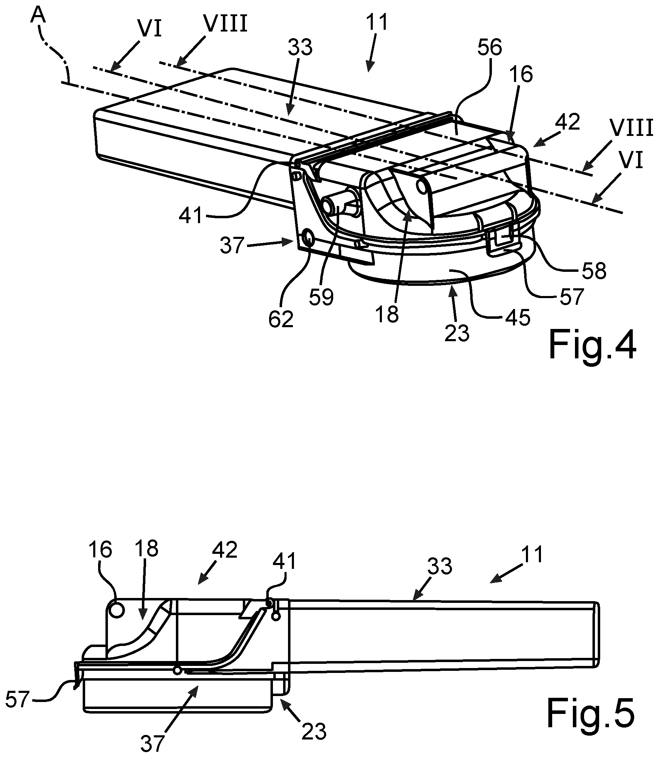

In Fig. 4 ist in perspektivischer Darstellung der geschlossene Zustand des Deckels 42 gezeigt. Es ist zu erkennen, dass sich der Griff 16 maximal auf das Niveau der Außenseite 56 des Deckels 42 außerhalb der Mulde 18 erstreckt. Er steht somit in vertikaler Richtung und somit in z-Richtung nicht nach oben über. Ebenso ist zu erkennen, dass im geschlossenen Zustand des Deckels 42 sich diese Außenseite 56 nicht über das Höhenniveau der oberen Wand bzw. des oberen Abschlusses des Behälters 33 hinaus erstreckt.

Darüber hinaus ist gemäß der Darstellung in Fig. 4 der verrastete Zustand des Rastelements 57 mit dem Rastelement 58 gezeigt.

In der Darstellung in Fig. 4 ist in dem Adapterträger 37 auch ein elektrischer Anschluss 62 ausgebildet. Dies ist insbesondere vorgesehen, wenn die Heizeinheit 46 ein Rohrheizkörper ist, der in dem Wassertank 11 selbst angeordnet ist, insbesondere in dem Gehäuse 45 unter der Verdampferschale 44 positioniert ist.

In Fig. 5 ist eine Seitenansicht der Darstellung von Fig. 4 gezeigt. Die oben angesprochenen bündigen Übergänge sind zu erkennen. Darüber hinaus ist die Anordnung des Deckels 42 im geschlossenen Zustand im Hinblick auf sein Höhenniveau zum Behälter 33 gezeigt. Darüber hinaus ist auch hier das nach vorne quasi aneinander Anreihen des Behälters 33 und der Verdampfereinheit 23 zu erkennen. Auch das sich nach unten hin Absetzen der Verdampferschale 44 gegenüber dem Boden 48 des Behälters 33 ist zu erkennen.

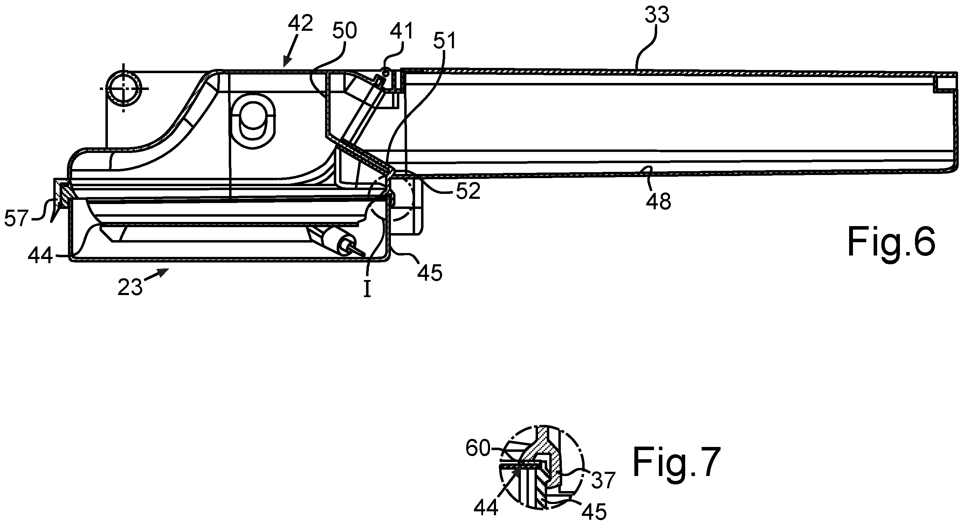

In Fig. 6 ist eine erste Schnittdarstellung entlang der Schnittlinie VI-VI in Fig. 4 gezeigt. Dies ist ein in etwa mittiger Schnitt durch den Wassertank 11. Das Eingreifen der Frontkante 51 in die Aufnahmenut 52 ist gezeigt. Die dichtende Separierung zwischen dem Innenbereich des Behälters 33 und dem Verdampferbereich der Verdampfereinheit 23 durch den geschlossenen Zustand des Deckels 42 und insbesondere durch das Eingreifen der Verschlusswand 50 mit ihrer Frontkante 51 in die Aufnahmenut 52 ist zu erkennen.

In Fig. 7 ist eine vergrößerte Darstellung des Teilausschnitts I in Fig. 6 gezeigt. Wie zu erkennen ist ist zwischen dem Adapterträger 37 und dem Gehäuse 45 eine übereinanderschnappende bzw. verrastende Anordnung gegeben. Darüber hinaus ist zwischen der Verdampferschale 44 und dem Adapterträger 37 eine Dichtung 60 angeordnet.

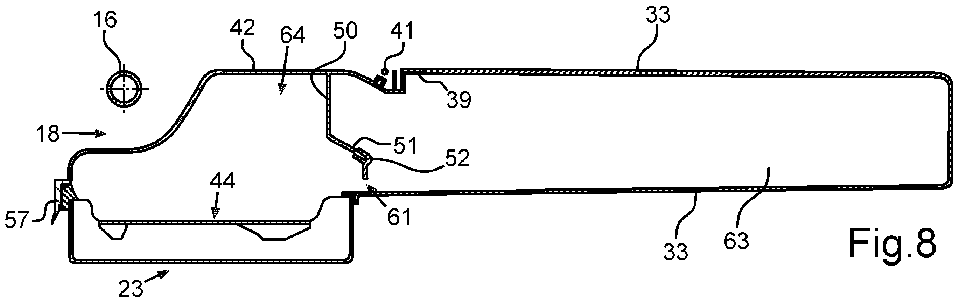

In Fig. 8 ist eine weitere Schnittdarstellung entlang der Schnittlinie VIII-VIII in Fig. 4 gezeigt. In dieser Ausgestaltung ist ein Loch 61 bzw. eine lochartige Öffnung gezeigt, über welches bzw. welche Wasser aus dem Behälter 33 gemäß dem Vogeltränkeprinzip in die Verdampfereinheit 23, insbesondere die Verdampferschale 44 gelangen kann.

Darüber hinaus ist in den Darstellungen gemäß Fig. 6 und 8 die Anflanschung des Adapterträgers 37 frontseitig an dem Behälter 33 zu erkennen.

Durch den Wassertank 11 ist ein Wasservorratsbereich 63 im Behälter 33 und ein Verdampferbereich 64 in der Verdampfereinheit 23 unter dem Deckel zwischen dem Deckel 42 und der Verdampferschale 44 gebildet.

**Bezugszeichenliste**

| | | | |
|---|---|---|---|
| 1 | Dampfgerät | 33 | Behälter |
| 2 | Garraum | 34 | vorderes Ende |
| 3 | Muffel | 35 | Öffnung |
| 4 | Beschickungsöffnung | 36 | Rand |
| 5 | Tür | 37 | Adapterträger |
| 6 | Außenseite | 38 | Teilbereich |
| 7 | Griff | 39 | Flansch |
| 8 | Schublade | 40 | Dachwand |
| 9 | Frontteil | 41 | Drehachse |
| 10 | Aufnahmebereich | 42 | Deckel |
| 11 | Wassertank | 43 | Teilbereich |
| 12 | Wandabschnitt | 44 | Verdampferschale |
| 13 | hintere Wand | 45 | Gehäuse |
| 14 | Wandabschnitt | 46 | Heizeinheit |
| 15 | Wasser | 47 | Boden |
| 16 | Griff | 48 | Boden |
| 17 | Feder | 50 | Verschlusswand |
| 18 | Mulde | 51 | Frontkante |
| 19 | Rückwand | 52 | Aufnahmenut |
| 20 | Andockstutzen | 53 | Dichtung |
| 21 | Andockbereich | 54 | unterer Rand |
| 22 | Leitungssystem | 55 | Aufnahmenut |
| 23 | Verdampfereinheit | 56 | Außenseite |
| 24 | Energieversorgungseinheit | 57 | Rastelement |
| 25 | Bedienvorrichtung | 58 | Rastelement |
| 26 | Bedienelement | 59 | Dampfauslassstutzen |
| 27 | Anzeigeeinheit | 60 | Dichtring |
| 28 | Frontseite | 61 | Loch |
| 29 | Motor | 62 | Anschluss |
| 30 | Vorderkante | 63 | Wasservorratsbereich |
| 31 | Innenwand | 64 | Verdampferbereich |
| 32 | vordere Wand | P1 | Pfeildarstellung |

## Patentansprüche

1. Wassertank (11) für ein Dampfgargerät (1) mit einem Behälter (33) zur Aufnahme des Wassers (15), wobei sich an der Frontseite des Behälters (33) eine Öffnung befindet, und mit einer Verdampfereinheit (23) zum Verdampfen des Wassers (15), welche mit dem Behälter (33) eine Einheit bildet, und einem Adapterträger (37), wobei die Verdampfereinheit (23) mit dem Adapterträger (37) an dem Behälter (33) angeordnet ist, **dadurch gekennzeichnet, dass** die Verdampfereinheit (23) in frontseitiger Verlängerung des Behälters (33) an dessen einem Ende (34) anschließend an dem Behälter (33) angeordnet ist, und ein Deckel (42) der Verdampfereinheit (23) schwenkbar an dem Adapterträger (37) angeordnet ist.

2. Wassertank (11) nach Anspruch 1, **dadurch gekennzeichnet, dass** die Verdampfereinheit (23) topfförmig ausgebildet ist.

3. Wassertank (11) nach einem der vorhergehenden Ansprüche, **dadurch gekennzeichnet, dass** die Verdampfereinheit (23) mit einer Oberseite einer Verdampferschale (44) gegenüber dem Boden (48) des Behälters (33) nach unten versetzt angeordnet ist.

4. Wassertank (11) nach einem der vorhergehenden Ansprüche, **dadurch gekennzeichnet, dass** der Behälter (33) an der der Verdampfereinheit (23) zugewandten Stirnseite mit einer Öffnung (35) ausgebildet ist.

5. Wassertank (11) nach einem der vorhergehenden Ansprüche, **dadurch gekennzeichnet, dass** der Deckel (42) im geschlossenen Zustand den Behälter (33) von der Verdampfereinheit (23) dichtend separiert.

6. Wassertank nach einem er vorhergehenden Ansprüche, **dadurch gekennzeichnet, dass** an der Innenseite (49) des Deckels (42) eine Verschlusswand (50) angeordnet ist, welche im geschlossenen Zustand des Deckels (42) eine frontseitige Öffnung (35) des Behälters (33) dichtend verschließt.

7. Wassertank (11) nach Anspruch 6, **dadurch gekennzeichnet, dass** die Verschlusswand (50) eine Frontkante (51) aufweist, welche im geschlossenen Zustand des Deckels (42) in eine Aufnahmenut (52) eines Adapterträgers (37) eingreift.

8. Wassertank (11) nach einem der vorhergehenden Ansprüche, **dadurch gekennzeichnet, dass** an der Außenseite (56) des Deckels (42) ein Griff (16), insbesondere ein Bügelgriff, angeordnet ist.

9. Wassertank (11) nach Anspruch 8, **dadurch gekennzeichnet, dass** der Griff (16) in einer Mulde (18) des Deckels (42) angeordnet ist, insbesondere derart, dass er sich maximal bis auf das Niveau der Außenseite (56) des Deckels (42) außerhalb der Mulde (18) nach außen erstreckt.

10. Wassertank (11) nach einem der vorhergehenden Ansprüche, **dadurch gekennzeichnet, dass** im geschlossenen Zustand des Deckels (42) dessen Außenseite (56) im Wesentlichen bündig mit der Oberseite des Behälters (33) ist.

11. Wassertank (11) nach einem der vorhergehenden Ansprüche, **dadurch gekennzeichnet, dass** der Deckel (42) zumindest ein Rastelement (57) aufweist, das mit einem Rastelement (58) an einem Adapterträger (37) verrastbar ist.

12. Wassertank (11) nach einem der vorhergehenden Ansprüche, **dadurch gekennzeichnet, dass** der Deckel (42) eine Formgebung aufweist, derart, dass im geschlossenen Zustand eine frontseitige Öffnung (35) des Behälters (33) von vorne und die Verdampferschale (44) von oben abgedeckt sind.

13. Wassertank (11) nach einem der vorhergehenden Ansprüche, **dadurch gekennzeichnet, dass** der Deckel (42) zumindest einen Dampfauslassstutzen (59) aufweist.

14. Wassertank (11) nach einem der vorhergehenden Ansprüche, **dadurch gekennzeichnet, dass** die Verdampfereinheit (23) ein Gehäuse (45) aufweist, in dem eine Verdampferschale (44) angeordnet ist und in welchem unter der Verdampferschale (44) eine Heizeinheit (46) angeordnet ist.

15. Wassertank (11) nach einem der vorhergehenden Ansprüche 1 bis 13, **dadurch gekennzeichnet, dass** die Verdampfereinheit (23) eine Verdampferschale (44) aufweist, welche zumindest bereichsweise aus einem magnetischen Material ausgebildet ist, welches in Wechselwirkung mit einer wassertankexternen Induktionseinheit zum induktiven Aufheizen der Verdampferschale (44) ausgebildet ist.

16. Wassertank (11) nach einem der vorhergehenden Ansprüche, **dadurch gekennzeichnet, dass** der Wassereinlauf von dem Behälter (33) in die Verdampfereinheit (23) gemäß dem Vogeltränkeprinzip erfolgt.

17. Dampfgargerät (1) mit einem Wassertank (11) nach einem der vorhergehenden Ansprüche, welcher aus dem Dampfgargerät (11) reversibel entnehmbar und einsetzbar ist.

18. Dampfgargerät (1) nach Anspruch 17, bei welchem frontseitig eine Bedienblende ausgebildet ist, welche bewegbar an dem Dampfgargerät (1) angeordnet ist und in welche der Wassertank (11) einsetzbar ist.

19. Dampfgargerät (1) nach Anspruch 18, bei welchem die Bedienblende als herausziehbare Schublade (8) ausgebildet ist, welche hinter einem Frontteil (9) einen, insbesondere von oben bestückbaren, Aufnahmebereich (10) für den Wassertank (11) aufweist.

## Claims

1. Water tank (11) for a steamer (1) having a container (33) for receiving the water (15), wherein an opening is located on the front of the container (33), and having an evaporator unit (23) for evaporation of the water (15), which forms a unit with the container (33), and an adapter support (37), wherein the evaporator unit (23) with the adapter support (37) is arranged on the container (33), **characterised in that** in the front extension of the container (33) the evaporator unit (23) is arranged at its one end (34) so as to adjoin the container (33) and a cover (42) of the evaporator unit (23) is pivotably arranged on the adapter support (37).

2. Water tank (11) according to claim 1, **characterised in that** the evaporator unit (23) is constructed so as to be pot-shaped.

3. Water tank (11) according to one of the preceding claims, **characterised in that** with an upper side of an evaporator bowl (44) the evaporator unit (23) is arranged so as to be downwardly offset with respect to the bottom (48) of the container (33).

4. Water tank (11) according to one of the preceding claims, **characterised in that** the container (33) is constructed with an opening (35) at the end face facing the evaporator unit (23).

5. Water tank (11) according to one of the preceding claims, **characterised in that** when closed, the lid (42) separates the container (33) from the evaporator unit (23) so as to be sealed.

6. Water tank according to one of the preceding claims, **characterised in that** a sealing wall (50) is arranged on the inside (49) of the lid (42) which, when the lid (42) is closed, closes a front opening (35) of the container (33) so as to be sealed.

7. Water tank (11) according to claim 6, **characterised in that** the sealing wall (50) has a front edge (51) which, when the lid (42) is closed, engages in a receiving groove (52) of an adapter support (37).

8. Water tank (11) according to one of the preceding claims, **characterised in that** a handle (16), in particular a bow-shaped handle, is arranged on the outer side (56) of the lid (42).

9. Water tank (11) according to claim 8, **characterised in that** the handle (16) is arranged in a depression (18) of the lid (42), in particular in such a way that it extends outwards at most to the level of the outer side (56) of the lid (42) outside of the depression (18).

10. Water tank (11) according to one of the preceding claims, **characterised in that** when the lid (42) is closed the outer side (56) thereof is substantially flush with the upper side of the container (33).

11. Water tank (11) according to one of the preceding claims, **characterised in that** the lid (42) has at least one latching element (57) which can latch with a latching element (58) on an adapter support (37).

12. Water tank (11) according to one of the preceding claims, **characterised in that** the lid (42) has a shape such that, when closed, a front opening (35) of the container (33) is covered from the front and the evaporator bowl (44) is covered from above.

13. Water tank (11) according to one of the preceding claims, **characterised in that** the lid (42) has at least one steam outlet nozzle (59).

14. Water tank (11) according to one of the preceding claims, **characterised in that** the evaporator unit (23) has a housing (45) in which an evaporator bowl (44) is arranged and in which a heating unit (46) is arranged under the evaporator bowl (44).

15. Water tank (11) according to one of the preceding claims 1 to 13, **characterised in that** the evaporator unit (23) has an evaporator bowl (44) which is constructed at least in certain sections from a magnetic material which, in conjunction with an induction unit external to the water tank, is designed for inductive heating of the evaporator bowl (44).

16. Water tank (11) according to one of the preceding claims, **characterised in that** the water intake from the container (33) into the evaporator unit (23) takes place according to the birdbath principle.

17. Steamer (1) having a water tank (11) according to one of the preceding claims, which can be reversibly removed from and inserted in the steamer (11).

18. Steamer (1) according to claim 17, wherein a control panel is constructed at the front which is movably arranged on the steamer (1) and in which the water tank (11) can be inserted.

19. Steamer (1) according to claim 18, wherein the control panel is constructed as a removable drawer (8) which behind a front part (9) has a receiving zone (10) for the water tank (11) which can be fitted in particular from above.

## Revendications

1. Réservoir d'eau (11) pour un appareil de cuisson à la vapeur (1) avec un récipient (33) pour la réception de l'eau (15) dans lequel se trouve une ouverture sur la face avant du récipient (33), et avec une unité d'évaporateur (23) pour l'évaporation de l'eau (15), laquelle forme une unité avec le récipient (33), et un support adaptateur (37), l'unité d'évaporateur (23) étant disposée avec le support adaptateur (37) sur le récipient (33), **caractérisé en ce que** l'unité d'évaporateur (23) est disposée dans le prolongement frontal du récipient (33) à l'une de ses extrémités (34) à la suite du récipient (33), et un couvercle (42) de l'unité d'évaporateur (23) est disposé pivotant sur le support adaptateur (37).

2. Réservoir d'eau (11) selon la revendication 1, **caractérisé en ce que** l'unité d'évaporateur (23) se présente sous forme de pot.

3. Réservoir d'eau (11) selon l'une des revendications précédentes, **caractérisé en ce que** l'unité d'évaporateur (23) avec une face supérieure d'une coque d'évaporateur (44) est disposée de manière décalée vers le bas par rapport au fond (48) du récipient (33).

4. Réservoir d'eau (11) selon l'une des revendications précédentes, **caractérisé en ce que** le récipient (33) est constitué sur la face frontale orientée vers l'unité d'évaporateur (23) avec une ouverture (35).

5. Réservoir d'eau (11) selon l'une des revendications précédentes, **caractérisé en ce que** le couvercle (42), à l'état fermé, sépare hermétiquement le récipient (33) de l'unité d'évaporateur (23).

6. Réservoir d'eau selon l'une des revendications précédentes, **caractérisé en ce que** sur la face interne (49) du couvercle (42) est disposée une paroi de fermeture (50), laquelle, à l'état fermé du couvercle (42), ferme hermétiquement une ouverture frontale (35) du récipient (33).

7. Réservoir d'eau (11) selon la revendication 6, **caractérisé en ce que** la paroi de fermeture (50) comprend un bord avant (51), lequel, à l'état fermé du couvercle (42), s'engage dans une rainure de réception (52) d'un support adaptateur (37).

8. Réservoir d'eau (11) selon l'une des revendications précédentes, **caractérisé en ce que** sur la face externe (56) du couvercle (42) est disposée une poignée (16), en particulier une poignée étrier.

9. Réservoir d'eau (11) selon la revendication 8, **caractérisé en ce que** la poignée (16) est disposée dans un creux (18) du couvercle (42), en particulier de telle sorte qu'elle s'étende vers l'extérieur au maximum jusqu'au niveau de la face externe (56) du couvercle (42) en dehors du creux (18).

10. Réservoir d'eau (11) selon l'une des revendications précédentes, **caractérisé en ce que**, à l'état fermé du couvercle (42), la face externe (56) de celui-ci est sensiblement au même niveau que la face supérieure du récipient (33).

11. Réservoir d'eau (11) selon l'une des revendications précédentes, **caractérisé en ce que** le couvercle (42) comprend au moins un élément d'encliquetage (57) qui est encliquetable avec un élément d'encliquetage (58) sur un support adaptateur (37).

12. Réservoir d'eau (11) selon l'une des revendications précédentes, **caractérisé en ce que** le couvercle (42) présente une conformation telle que, à l'état fermé, une ouverture frontale (35) du récipient (33) soit recouverte par l'avant et la coque d'évaporateur (44) soit recouverte par le haut.

13. Réservoir d'eau (11) selon l'une des revendications précédentes, **caractérisé en ce que** le couvercle (42) comprend au moins une tubulure d'évacuation de vapeur (59).

14. Réservoir d'eau (11) selon l'une des revendications précédentes, **caractérisé en ce que** l'unité d'évaporateur (23) comprend un boîtier (45) dans lequel est disposée une coque d'évaporateur (44) et dans lequel est disposée une unité chauffante (46) sous la coque d'évaporateur (44).

15. Réservoir d'eau (11) selon l'une des revendications précédentes 1 à 13, **caractérisé en ce que** l'unité d'évaporateur (23) comprend une coque d'évaporateur (44), laquelle est constituée au moins par endroits à partir d'une matière magnétique qui est en interaction avec une unité d'induction externe au réservoir d'eau pour le chauffage inductif de la coque d'évaporateur (44).

16. Réservoir d'eau (11) selon l'une des revendications précédentes, **caractérisé en ce que** l'arrivée d'eau depuis le récipient (33) dans l'unité d'évaporateur (23) s'effectue selon le principe des vasques à oiseaux.

17. Appareil de cuisson à la vapeur (1) avec un réservoir d'eau (11) selon l'une des revendications précédentes, lequel peut être retiré de l'appareil de cuisson à la vapeur (1) et installé dans celui-ci de manière réversible.

18. Appareil de cuisson à la vapeur (1) selon la revendication 17, dans lequel est constitué sur le côté avant un panneau de commande, lequel est disposé mobile sur l'appareil de cuisson à la vapeur (1) et dans lequel le réservoir d'eau (11) peut être installé.

19. Appareil de cuisson à la vapeur (1) selon la revendication 18, dans lequel le panneau de commande est conçu sous la forme d'un tiroir extractible (8), lequel comprend derrière une partie avant (9) une zone de réception (10), en particulier pouvant être garnie par le haut, pour le réservoir d'eau (11).
